Europäisches Patentamt

(19) **European Patent Office**

**Office européen des brevets**

(11) Numéro de publication: **0 085 588**
**B1**

(12) **FASCICULE DE BREVET EUROPEEN**

(45) Date de publication du fascicule du brevet:
**23.10.85**

(21) Numéro de dépôt: **83400064.8**

(22) Date de dépôt: **12.01.83**

(51) Int. Cl.⁴: **B 60 H 1/00,** F 04 D 29/60,
F 16 M 13/02, B 60 R 11/00

(54) **Support pour mécanismes à moteurs électriques, notamment moto-ventilateurs, compresseurs, pompes et analogues.**

(30) Priorité: **03.02.82 FR 8201705**

(43) Date de publication de la demande:
**10.08.83 Bulletin 83/32**

(45) Mention de la délivrance du brevet:
**23.10.85 Bulletin 85/43**

(84) Etats contractants désignés:
**BE DE GB IT NL SE**

(56) Documents cités:
**EP - A - 0 014 749
WO - A - 80/00783
DE - A - 955 466
DE - A - 2 226 315
FR - A - 2 223 571
FR - A - 2 466 644
FR - A - 2 486 176
GB - A - 1 011 083
GB - A - 1 599 743**

(73) Titulaire: **SOCIETE ANONYME DES USINES CHAUSSON, 35, rue Malakoff, F-92601 Asnieres Cedex Hauts-de-Seine (FR)**

(72) Inventeur: **Poitier, Gérard Claude Marcel, 161 avenue Gabriel Péri, F-92230 Gennevilliers (FR)**

(74) Mandataire: **Madeuf, Claude Alexandre Jean et al, CABINET MADEUF 3, avenue Bugeaud, F-75116 Paris (FR)**

## Description

La présente invention concerne le montage de mécanismes divers du genre moto-ventilateurs, compresseurs, pompe de lave-glace, échangeurs de chaleur et analogues qui sont utilisés dans des ensembles mécaniques, notamment des véhicules.

L'invention concerne plus particulièrement un support qui, d'une part, doit pouvoir être lui-même mis en place de façon extrêmement simple à l'intérieur d'un bâti et, d'autre part, doit pouvoir être muni d'un mécanisme sans qu'il y ait à utiliser aucun outil ni à mettre en oeuvre aucun élément de fixation du genre vis ou boulons et, par ailleurs, le rapport doit permettre le démontage du mécanisme sans qu'il en résulte une détérioration de ce support.

L'invention trouve une application particulièrement avantageuse dans le montage de moto-ventilateurs pour climatiseurs automobiles.

La technique antérieure a déjà fait connaître, notamment pour la réalisation de sèche-cheveux, un support pour un moteur électrique devant entraîner un ventilateur. C'est le cas du WO 80/00783 qui décrit un support pour un mécanisme à moteur électrique comportant un boîtier-support muni de gorges formant glissières de guidage et de centrage du mécanisme à moteur.

L'invention, par sa mise en œuvre, permet de faire en sorte que le moteur soit parfaitement retenu, c'est-à-dire que non Seulement il ne puisse pas coulisser axialement lorsqu'il est monté et est empêché de tourner lorsqu'il est mis en place mais de plus il ne peut occuper qu'une seule position dans son support.

Ces avantages ne nuisent cependant pas à un démontage éventuel extrêmement facile du moteur.

Conformément à l'invention, eutre les glissières de guidage et de maintien de la culasse du moteur à fixer, le support comporte en outre au moins un ergot formé à l'extrémité d'une patte creuse, ledit ergot formant crochet de retenue pour une saillie de la culasse du moteur lorsque cette dernière est engagée dans les glissières formées ainsi que l'ergot sur un plateau-support en matière moulée.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

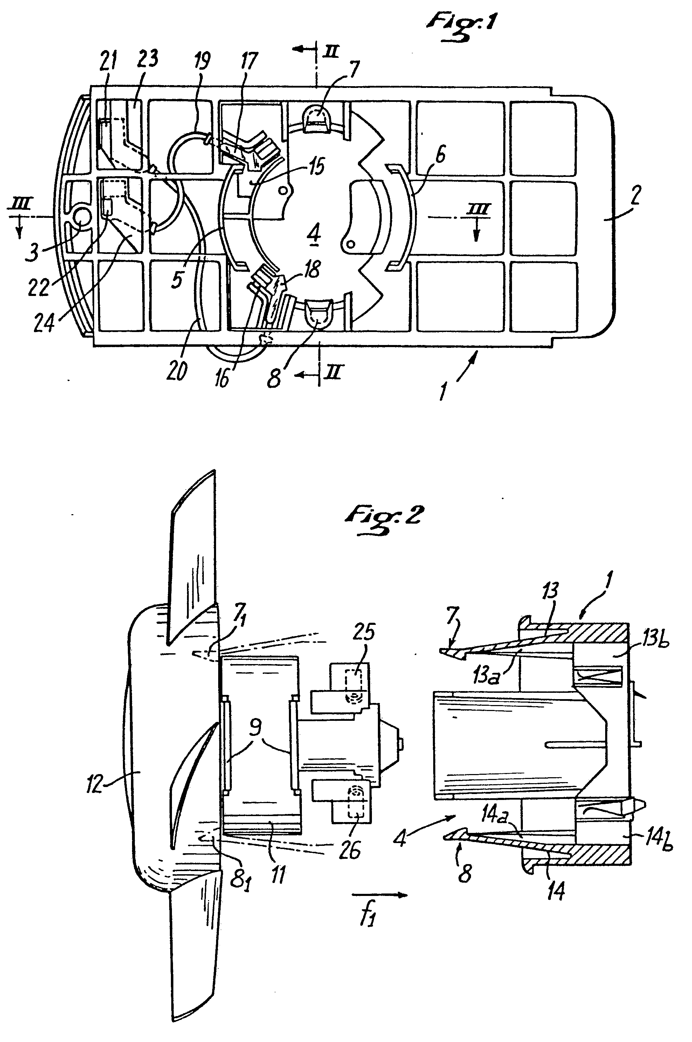

La fig. 1 est une élévation vue de face d'un support pour moto-ventilateur faisant application de l'invention.

La fig. 2 est une élévation partiellement en coupe du support de la fig. 1 vue suivant la ligne II de cette figure et du moto-ventilateur qu'il doit supporter.

La fig. 3 est une coupe-élévation éclatée analogue à la fig. 2 mais vue suivant la ligne III-III de la fig. 1.

Dans la description qui suit, l'invention est décrite dans son application au support d'un moto-ventilateur désigné dans son ensemble par la référence 1. Ce support est constitué par un plateau ou une grille, par exemple en matière plastique moulée, qui comporte sur un côté une languette 2 destinée à être introduite dans une rainure d'un bâti quelconque pour y être fixée, la grille présentant par exemple sur son autre côté un trou 3 pour le passage d'un pion, d'un boulon ou d'une vis de centrage et de fixation. Au voisinage de sa partie médiane la grille forme un berceau désigné dans son ensemble par 4. Ce berceau comporte, dans l'exemple représenté, deux glissières 5 et 6 diamétralement opposées et deux ergots 7, 8, également opposés de façon diamétrale et qui sont décalés de 90° par rapport aux glissières.

Les glissières sont conformées intérieurement de façon complémentaire à des saillies 9, 10 que présente, à sa périphéri, la culasse d'un moteur électrique 11 sur l'arbre duquel est calé un ventilateur 12.

La conformation des glissières est avantageusement prévue compte tenu de celle de la culasse du moteur et des saillies 9, 10 pour que ledit moteur ne puisse être mis en place dans les glissières que d'une seule façon, c'est-à-dire que les saillies 9 ne puissent entrer que dans les glissières 6 tandis que les saillies 10 ne peuvent entrer que dans les glissières 5.

Les ergots 7 et 8 sont formés à l'extrémité de pattes 13, 14 qui délimitent intérieurement chacune un évidement 13a respectivement 14a de section longitudinale conique ou tronconique. Les évidements 13a, 14a sont prolongés par des rainures semi-cylindriques 13b, 14b qui ouvrent sur la face arrière de la grille 1.

La grille forme dans le fond du berceau 4 des palettes 15, 16 pour la mise en place, par clipsage, de connecteurs 17, 18 reliés par des conducteurs souples 19, 20 à des bornes 21, 22 également clipsées sur des palettes 23, 24 et conformées pour recevoir un connecteur non représenté par simple emboîtement. Ce mode de liaison étant bien connu dans la technique n'a pas à être décrit davantage.

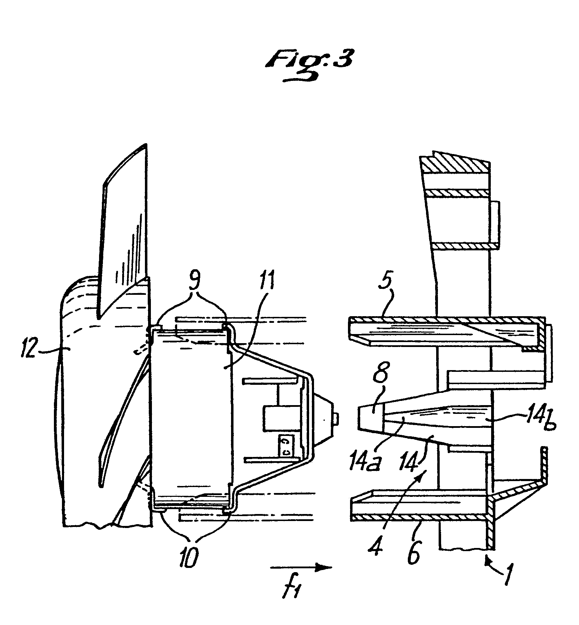

Comme le montre la fig. 3, pour mettre en place le moto-ventilateur, il suffit d'introduire ses saillies 9, 10 dans les glissières 5, 6, puis de faire coulisser la culasse du moteur dans le sens de la flèche $f_1$. Les ergots 7, 8 sont ainsi soulevés en faisant fléchir légèrement les pattes 13, 14. En fin d'engagement, les ergots 7, 8 viennent accrocher l'extrémité libre de la culasse du moteur comme cela est illustré en $7_1$, $8_1$ à la fig. 2. Dans cette position, des bornes 25, 26 du moteur sont en prise avec les connecteurs 17, 18 de sorte que la fixation de l'ensemble moto-ventilateur est assurée en même temps que la liaison électrique est réalisée. La forme des glissières 5, 6 est évidemment prévue pour empêcher tout mouvement de rotation entre elles et le moteur.

Lorsqu'il y a besoin de démonter pour une raison quelconque le moto-ventilateur, il suffit d'introduire par les rainures 13b, 14b un outil, par exemple un tournevis. Cet outil prend appui alors sur la périphérie de la culasse du moteur 11 et contre la paroi conique de l'évidement 13a, respectivement 14a. Les ergots 7, 8 sont ainsi soulevés, ce qui libère le moteur qui peut être extrait facilement en le faisant coulisser facilement dans le sens de la flèche $f_1$. Un autre moteur peut ensuite être mis en place ou le même moteur si sa réparation a pu être effectuée.

En variante, le plateau ou grille peut comporter plusieurs berceaux à glissières et crochets de retenue et il peut lui-même être muni de crochets creux pour sa propre fixation, par exemple dans des lumières ou des saillies de l'ensemble qui doit le comporter.

## Revendications

1. Support pour mécanisme à moteur électrique, notamment moto-ventilateurs, compresseurs, pompes et analogues comportant un boîtier-support (1) muni de gorges (5, 6) formant glissières de guidage et de centrage du mécanisme à moteur (11), caractérisé en ce qu'il comporte en outre entre les glissières, au moins un ergot (7, 8) formé à l'extrémité d'une patte creuse (13, 14), ledit ergot formant crochet de retenue pour une saillie de la culasse du moteur (11) lorsque cette dernière est engagée dans les glissières (5, 6) celles-ci etant formées, ainsi que l'ergot, sur un plateau-support (1) en matière moulée.

2. Support suivant la revendication 1, caractérisé en ce que les glissières de guidage (5, 6) sont conformées pour correspondre respectivement à des saillies complémentaires (9, 10) du moteur (11) pour que ce moteur ne puisse être mis en place dans lesdites glissières (5, 6) que d'une seule façon et que sa rotation soit empêchée par rapport aux glissières.

3. Support suivant l'une des revendications 1 et 2, caractérisé en ce qu'il est prévu deux glissières (5, 6) et deux ergots (7, 8) respectivement décalés de 90° par rapport aux glissières et diamétralement opposés.

4. Support suivant l'une des revendications 1 à 3, caractérisé en ce que les pattes (13, 14) terminées par les ergots (7, 8) délimitent intérieurement un évidement conique (13a, 14a) ouvrant sur la face arrière de la grille (1) formant le plateau-support.

5. Support suivant l'une des revendications 1 à 4, caractérisé en ce que les glissières (5, 6) et les pattes (13, 14) terminées par les ergots (7, 8) délimitent un berceau dans le fond duquel sont prévues des palettes (15, 16) pour le clipsage de connecteurs électriques (17, 18) avec lesquels sont amenées en prise des bornes électriques (25, 26) du moteur (11) lorsque celui-ci est engagé dans les glissières (5, 6) et retenu par les ergots (7, 8).

6. Support suivant l'une des revendications 1 à 5, caractérisé en ce que la grille (1) comporte des moyens (3) pour sa propre fixation sur un bâti.

7. Support suivant l'une des revendications 1 à 6, caractérisé en ce que son plateau ou sa grille est muni de crochets creux pour sa propre fixation sur un bâti.

8. Support suivant l'une des revendications 1 à 7, caractérisé en ce qu'il comporte plusieurs jeux de glissières et crochets pour la fixation de plusieurs mécanismes.

## Patentansprüche

1. Träger für elektrisch angetriebene Maschine, insbesondere Ventilatoren, Kompressoren, Pumpen und ähnliches, mit einer Trägerplatte (1) mit Gleitführungen und -halterungen (5, 6) für das zu befestigende Motor-Gerät (11), dadurch gekennzeichnet, daß er zwischen den Gleitführungen und -halterungen mindestens eine Nase (7, 8) aufweist, die am Ende eines vorspringenden hohlen Arms (13, 14) ausgebildet ist, wobei diese Nase einen Fanghaken für einen Vorsprung des Motor-Geräts (11) bildet, wenn dieses in den Gleitführungen und -halterungen (5, 6) erfaßt ist, wobei diese, wie auch die Nase, von einer Trägerplatte (1) aus geformten Werkstoff abstehen.

2. Träger nach Anspruch 1, dadurch gekennzeichnet, daß die Gleitführungen und -halterungen (5, 6) so ausgebildet sind, daß sie ergänzenden Vorsprüngen (9, 10) des Motor-Geräts (11) entsprechen, so daß dieser Motor nur auf eine einzige Art in den Gleitführungen und -halterungen (5, 6) erfaßt werden kann und jede Drehbewegung des Motors in bezug auf die Gleitführungen und -halterungen verhindert wird.

3. Träger nach einem der Ansprüche 1 oder 2, dadurch gekennzeichnet, daß zwei Gleitführungen und -halterungen (5, 6) und zwei Nasen (7, 8) vorhanden sind, die jeweils um 90° versetzt sind und den Gleitführungen und -halterungen diametral gegenüberliegen.

4. Träger nach einem der Ansprüche 1 bis 3, dadurch gekennzeichnet, daß die Nasen (7, 8) bildenden Laschen (13, 14) im Inneren eine konische Ausnehmung (13a, 14a) begrenzen, die sich auf die Rückseite des die Trägerplatte bildenden Gitters (1) hin öffnet.

5. Träger nach einem der Ansprüche 1 bis 4, dadurch gekennzeichnet, daß die Gleitführungen und -halterungen (5, 6) und die die Nasen (7, 8) bildenden Laschen (13, 14) eine Wiege begrenzen, an deren Boden Schieber (15, 16) zum Festklemmen elektrischer Anschlüsse (17, 18) vorgesehen sind, mit welchen die elektrischen Anschlußklemmen (25, 26) des Motors (11) in Eingriff gebracht werden, wenn dieser in den Gleitführungen und -halterungen (5, 6) erfaßt ist und durch die Nasen (7, 8) zurückgehalten wird.

6. Träger nach einem der Ansprüche 1 bis 5, dadurch gekennzeichnet, daß das Gitter (1) eine Einrichtung (3) zu einer Befestigung auf einem Rahmen aufweist.

7. Träger nach einem der Ansprüche 1 bis 6, dadurch gekennzeichnet, daß seine Trägerplatte oder sein Gitter mit hohlen Fanghaken zur eigenen Befestigung ausgestattet ist.

8. Träger nach einem der Ansprüche 1 bis 7, dadurch gekennzeichnet durch mehrere Sätze von Gleitführungen und -halterungen sowie Fanghaken zur Befestigung mehrerer Geräte.

**Claims**

1. Support for electric motor mechanism, typically motor-ventilators, compressors, pumps and the like comprising a support-casing (1) provided with grooves (5, 6) forming guiding and centering slides of the motor mechanism (11), characterized in that it further comprises between the slides at least one catch (7, 8) formed at end of a hollow lug (13, 14), said catch forming a retaining hook for a protrusion of the armature of the motor (11) when said armature is engaged in the slides (5, 6), the latter being formed, as well as the catch, on a support-plate (1) in a moulded material.

2. Support according to claim 1, characterized in that the guiding slides (5, 6) are shaped to respectively correspond to complementary protrusions (9, 10) of the motor (11) in order that this motor can be positioned in said slides (5, 6) only in a single manner and that its rotation be prevented relatively to the slides.

3. Support according to one of claims 1 and 2, characterized in that there is provided two slides (5, 6) and two catches (7, 8) respectively shifted by 90° relatively to the slides and opposed diametrally.

4. Support according to one of claims 1 to 3, characterized in that the lugs (13, 14) terminated by the catches (7, 8) innerly form a tapered recess (13a, 14a) opening on the rear face of the grid (1) forming the support-plate.

5. Support according to one of claims 1 to 4, characterized in that the slides (5, 6) and the lugs (13, 14) terminated by catches (7, 8) form a craddle in the bottom of which there are provided blades (15, 16) for clipping electric connectors (17, 18) in which are engaged electric terminals (25, 26) of the motor (11) when the same is engaged in the slides (5, 6) and retained by the catches (7, 8).

6. Support according to one of claims 1 to 5, characterized in that the grid (1) comprises means (3) for its own fixation on a frame.

7. Support according to one of claims 1 to 6, characterized in that its plate or its grid is provided with hollow hooks for its own fixation on a frame.

8. Support according to one of claims 1 to 7, characterized in that it comprises a plurality of sets of slides and hooks for the fixation of a plurality of mechanisms.

Fig.1

Fig.2

0 085 588

Fig.3

7